# EUROPEAN PATENT APPLICATION

(11) **EP 2 535 608 A1**
(43) Date of publication of application: **19.12.2012**
(21) Application number: 11305762.4
(22) Date of filing: 17.06.2011
(51) Int. Cl.: F16C 19/18, F16C 33/58, F16C 33/66

(54) **Rolling bearing, notably for a turbocharger**

(71) Applicant: Aktiebolaget SKF, 415 50 Göteborg (SE)
(72) Inventor: Viault, Samuel, 37360 SAINT-ANTOINE-DU-ROCHER (FR); Wensing, Jeoren, 3991 WP HOUTEN (NL); Berruet, Nicolas, 37360 NEUILLE-PONT-PIERRE (FR); Corbett, Richard, 37230 FONDETTES (FR)
(74) Representative: Casalonga, Axel

(57) **Abstract**

The rolling bearing comprises an inner ring 26, an outer ring 28, at least one row of rolling elements 32 disposed between raceways provided on the inner and outer rings, a cage 36 to hold the row of rolling elements, and at least two sealing means 38, 40 disposed radially between the inner and outer rings and delimiting together with said rings a closed space 42 inside which the row of rolling elements and the cage are housed. A lubricant is located inside the closed space.

Circulating means 48, 52 for the lubricant are provided on the inner ring to obtain a circulation of lubricant towards the row of rolling elements during the rotation of said ring.

## Description

The present invention relates to the field of rolling bearings having an inner ring, and outer ring and one or more rows of rolling elements held by a cage between raceways provided on the two rings. The rolling bearings may be, for example, those used in a turbocharger for automotive vehicles.

In such application, a turbocharger is used to enhance the combustion engine performance by blowing compressed air into the cylinders of said engine.

A turbocharger generally comprises a housing, a shaft extending through an opening formed on the housing, a turbine wheel mounted on a first end portion of the shaft and located in an exhaust gases passage of the combustion engine, a compressor wheel mounted on an opposite second end portion of said shaft and located in an admission gases passage of the engine, and rolling bearings disposed between the shaft and the housing. When the turbine wheel is rotated by the flow of the exhaust gases, the shaft and the compressor wheel are rotated which leads to a compression of the admission gases introduced into the cylinders of the combustion engine.

The engine oil may be used for the lubrication of the rolling bearings. However, when the combustion engine stops, the delivery of engine oil is shut off. This causes a strong temperature increase of the residual oil located between the shaft and the rolling bearing near to the turbine wheel. The cooling of said rolling bearing is thus not satisfactory. Otherwise, the engine oil may contain foreign matter, for example small metal particles, thereby causing a premature wear of the rolling bearings.

To overcome these drawbacks, European patent application EP-A2-2 042 758 discloses a turbocharger comprising a tank for storing a specific lubricating oil for the rolling bearings, said tank being formed within the housing. A tube is provided between the storage tank and the space where are housed the rolling bearings to supply by capillary action the lubricating oil. This leads to a complex structure of the turbocharger as well as an increase of the mounting cost.

In other applications, it is known to use a deep groove ball bearing having two seals delimiting with the inner and outer rings a chamber inside which a lubricant such as grease has been introduced during the assembly. Such a bearing is called lubricated "for life".

With such a rolling bearing, it may however occurs an overheating of the lubricant located between the balls and the raceways of the inner and outer rings. This may cause an accelerated degradation of the lubricant and the failure of the rolling bearing.

One aim of the present invention is therefore to overcome the aforementioned drawbacks.

It is a particular object of the present invention to provide a rolling bearing, notably adapted for a turbocharger, in which the lubrication of the rolling elements is improved during use and which is simple to manufacture and economic.

In one embodiment, the rolling bearing comprises an inner ring, an outer ring, at least one row of rolling elements disposed between raceways provided on the inner and outer rings, and a cage to hold the row of rolling elements. The rolling bearing further comprises circulating means for a lubricant provided on at least one of the rings and/or the cage to obtain a circulation of lubricant towards the row of rolling elements during the rotation of said ring and/or the cage.

Preferably, each circulating means provided on at least one of the rings and/or the cage comprises at least a groove. The groove may be helicoid.

In one embodiment, each circulating means provided on at least one of the rings and/or the cage comprises first and second grooves axially opposite to one another with respect to the row of rolling elements.

In one embodiment, the circulating means are formed on an exterior surface of the inner ring and/or on a bore of the outer ring. The circulating means may open into the raceway of the corresponding ring.

Alternatively or in combination, the circulating means are formed on an exterior surface of the cage and/or on a bore of the cage. The circulating means may open into cavities receiving and holding the rolling elements of said row.

In one embodiment, the rolling bearing ranges between 30% and 95% of the axial dimension of the housing, and preferably ranges between 70% and 80%.

In one embodiment, the rolling bearing comprises at least two sealing means disposed radially between the inner and outer rings and delimiting together with said rings a closed space inside which the row of rolling elements and the cage are housed. A lubricant is located inside said closed space.

In one embodiment, the rolling bearing comprises two rows of rolling elements disposed between the inner and outer rings.

In another aspect, the invention relates to a turbocharger comprising a shaft, a housing, a turbine wheel and a compressor wheel mounted onto the shaft, and at least a rolling bearing as previously defined and disposed between the shaft and the housing.

The present invention and its advantages will be better understood by studying the detailed description of specific embodiments given by way of non-limiting examples and illustrated by the appended drawings on which:
- Figure 1 is an axial section of a turbocharger according to a first example of the invention,
- Figure 2 is an axial section of a rolling bearing of the turbocharger of Figure 1,
- Figure 3 is part section on a larger scale of Figure 2,
- Figure 4 is a perspective view of one part of the inner ring of the rolling bearing of Figure 2,
- Figure 5 is an axial section of a rolling bearing according to a second example of the invention,
- Figure 6 is a part section on a larger scale of Figure 5,
- Figure 7 is a perspective view of a cage of the rolling bearing of Figure 5, and
- Figure 8 is a perspective view of a cage of a rolling bearing according to a third example of the invention.

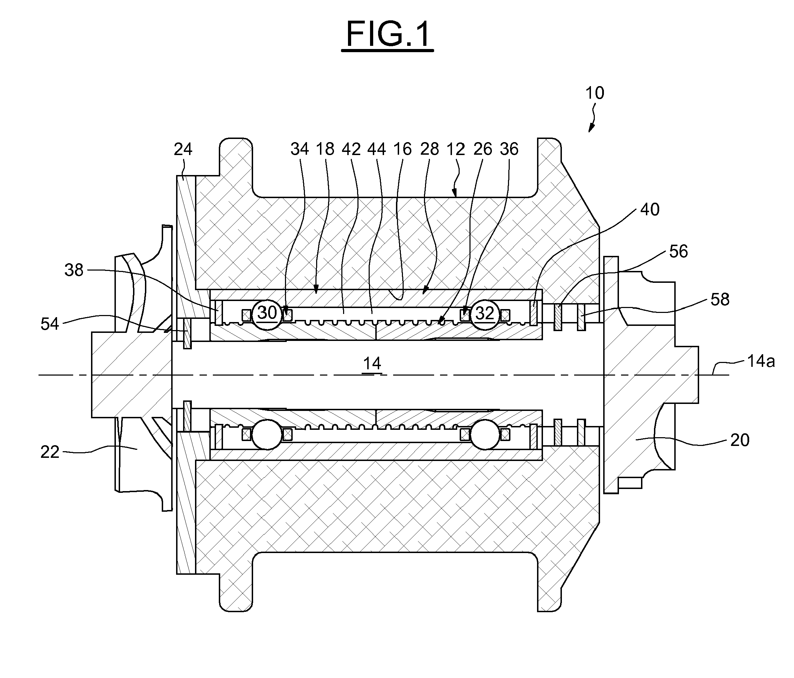

As illustrated on the Figure 1, which illustrates an embodiment of a turbocharger 10 according to an example of the invention, the turbocharger comprises a housing 12, a shaft 14 extending along a longitudinal axis 14a through a cylindrical bore or opening 16 of the housing, a rolling bearing 18 mounted onto the shaft 14 and disposed into the opening 16, a turbine wheel 20 fixed at one end of the shaft 14 and a compressor wheel 22 fixed at an opposite end of said shaft. The turbocharger 10 also comprises a cap 24 fixed at an axial end of the housing 12. In the disclosed embodiment, the axial length of the rolling bearing 18 ranges between 60% and 90% of the axial dimension of the opening 16 of the housing, and more precisely between 70% and 80%.

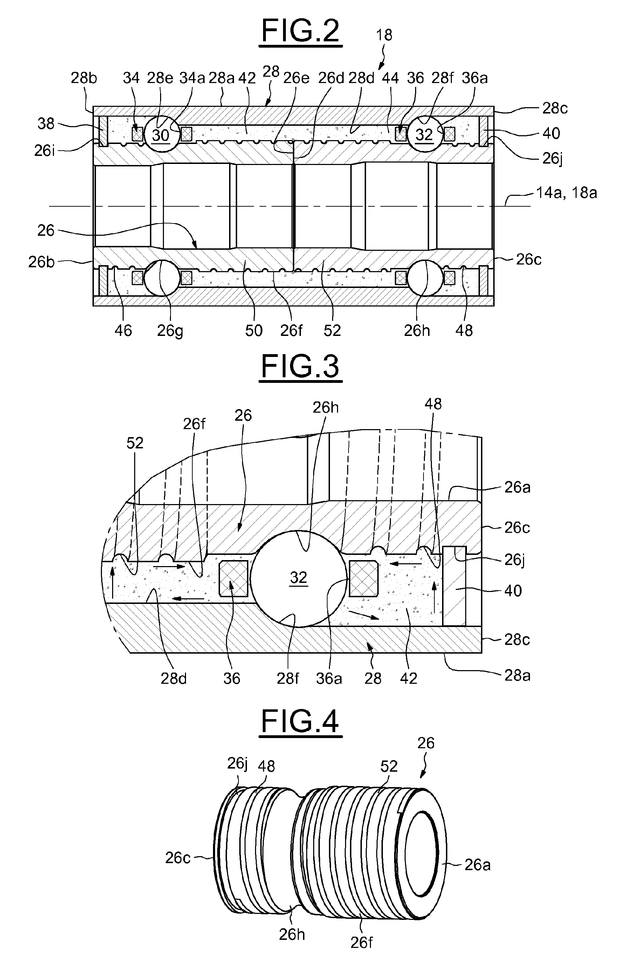

As shown more clearly on Figure 2, the rolling bearing 18 comprises an inner shaft or ring 26 and an outer ring 28 between which are housed two rows of rolling elements 30 and 32, which in this case are balls, two annular cages 34, 36 respectively maintaining the circumferential spacing of the rolling elements 30, 32 and two annular sealing rings 38, 40. The axis 18a of the rolling bearing is coaxial with the axis 14a of the shaft of the turbocharger.

The inner and outer rings 26, 28 are concentric and symmetric with respect to a transverse radial plane passing through the centre of the rolling bearing. The rings 26, 28 are of the solid type. A "solid ring" is to be understood as a ring obtained by machining with removal of material (by machining, grinding) from metal tube stock, bar stock, rough forgings and/or rolled blanks.

The outer ring 28 comprises an outer cylindrical surface 28a mounted radially into contact with the opening 16 (Figure 1) of the housing and delimited by opposite radial lateral surfaces 28b, 28c which respectively axially come into contact with the cap 24 and a radial shoulder of the housing 12. The outer ring 28 also comprises a bore 28d of cylindrical shape from which are formed toroidal raceways 28e, 28f having in cross-section a concave internal profile adapted to the rolling elements 30, 32. The raceways 28e, 28f are symmetrical with respect to the transverse radial plane passing through the centre of the rolling bearing.

In the disclosed embodiment, the inner ring 26 is made in two parts which are identical, symmetrical with respect to the transverse radial plane of symmetry of the rolling bearing and mounted axially fixedly one against the other. The inner ring 26 is here composed of two identical half-rings. Alternatively, the inner ring may be made into one part. The inner ring 26 has a bore 26a of cylindrical shape into which the shaft 14 (Figure 1) is mounted. Said bore is delimited by opposite radial outer lateral surfaces 26b and 26c, which are respectively coplanar with the lateral surfaces 28b, 28c of the outer ring. The radial surface 26c axially bears against a radial shoulder of the shaft 14. Each part or half-ring of the inner ring 26 comprises an radial inner lateral surface 26d, 26e axially bearing against the corresponding lateral surface of the other half-ring of said inner ring.

The inner ring 26 also comprises an exterior cylindrical surface 26f onto which first and second toroidal circular raceways 26g, 26h are formed. The said raceways have in cross-section a concave internal profile adapted to the rolling elements 30 and 32, the said raceways being directed radially outwards. The raceways 26g, 26h are symmetrical with respect to the transverse radial plane passing through the centre of the rolling bearing.

The inner ring 26 further comprises two annular grooves 26i, 26j formed radially towards the inside from the exterior surface 26f, respectively in the vicinity of the radial surfaces 26b, 26c. The grooves 26i, 26j are symmetrical with one another relative to the transverse radial plane of symmetry of the rolling bearing. Inside the grooves 26i, 26j are fixedly mounted the annular sealing rings 38, 40.

In the disclosed embodiment, the sealing rings 38, 40 are identical to one another and apply a static sealing with the inner ring 26 and a dynamic sealing with the outer ring 28. The sealing rings 38, 40 are made from metal, advantageously from a thin metal sheet blank. Alternatively, the sealing rings may be made by moulding a synthetic material such as an elastomer. The sealing rings 38, 40 are continuous in the circumferential direction. To facilitate their fitting into the grooves 26i, 26j of the inner ring, each of the sealing rings may alternatively be open at a point of its circumference.

The sealing rings 38, 40 are disposed radially between the inner and outer rings 26, 28. Each sealing ring 38, 40 extends radially towards the outer ring 28 and comes into sliding contact with the bore 28d of said ring. Alternatively, the sealing rings may remain at a small distance from said bore. The sealing ring 38 is axially situated on the compressor wheel side and the sealing ring 40 on the turbine wheel side.

The sealing ring 38 is located axially between the row of rolling elements 30 and the radial surfaces 26b, 28b of the inner and outer rings, the sealing ring 40 being mounted axially between the row of rolling elements 32 and the radial surfaces 26c, 28c of said rings. A closed space 42 is defined between the rings 26, 28 and the sealing rings 38, 40 in which the rolling elements 30, 32 and the associated cages 34, 36 are housed so as to be protected against external polluting elements. The closed space 42 is delimited radially by the exterior surface 26f of the inner ring and the bore 28d of the outer ring, and axially by the radial sealing rings 38, 40. The closed space 42 is advantageously filled with a lubricant 44, such as grease, to increase the overall sealing of the rolling bearing. The sealing rings 38, 40 have a dual function, namely to prevent ingress of undesirable external polluting elements into the rolling bearing 18 and to keep the lubricant 44 inside the closed space 42 to obtain a sealed rolling bearing 18 with its own lubricant.

Each cage 34, 36 holds the corresponding row of rolling elements 30, 32 and is located radially between the exterior surface 26f of the inner ring and the bore 28d of the outer ring while remaining at a small distance from said rings. Each cage 34, 36 comprises a plurality of cavities 34a, 36a which are advantageously spherical with a diameter slightly greater than that of the rolling elements 30, 32 so as to receive and hold the latter. Alternatively, the cages may have other means than spherical cavities for maintaining a regular circumferential spacing between the rolling elements 30, 32, for example open cavities bounded by external retaining claws. The cages 34, 36 can be made of moulded plastic or of metal.

In order to obtain a good circulation and distribution of the lubricant 44 during use, the inner ring 26 comprises two outer and inner helicoid grooves 46, 48 and 50, 52 formed radially towards the inside from the exterior surface 26f and directed radially outwards. Each half-ring of the inner ring 26 comprises one inner groove and one outer groove axially opposite to one another with respect to the corresponding raceway. The outer grooves 46 and 48, respectively the inner grooves 50 and 52, are symmetrical with respect to the transverse radial plane passing through the centre of the rolling bearing. In the disclosed embodiment, the grooves 48 to 52 have in cross-section a concave internal profile in the shape of a semi-circle. Alternatively, the grooves may have in cross-section another concave profile, for instance a U-shape or a triangular shape. The grooves 46 to 52 may be formed by machining the exterior surface 26f of the inner ring, for example by milling.

As shown more clearly on Figures 3 and 4, one end of the outer groove 48 of the one-half inner ring 26 is formed in the vicinity of the annular groove 26j, the other end opening into the raceway 26h for the row of rolling elements 32. The outer groove 48 extends helicoidally on the exterior surface 26f on the inner ring axially between the annular groove 26j and the raceway 26h. The inner groove 52 starts from the vicinity of the radial surface 26e and opens into the raceway 26h. The inner groove 52 extends helicoidally on the exterior surface 26f of the inner ring and is located axially between the radial surface 26e and the raceway 26h. The pitches of the grooves 48, 52 are identical to one another.

The outer and inner grooves 48, 52 have opposite directions of helix. The directions of helix are opposed and such that lubricant located into the grooves 48, 52 is forced under the influence of said grooves to flow towards the row of rolling elements 32 when the inner ring 26 rotates. The helicoidal grooves 48, 52 of the inner ring promotes the circulation of the lubricant 44 that is present into said grooves axially towards the raceway 26h of said ring, said lubricant emerging from the grooves directly onto said raceway and the rolling elements 32.

The recirculation of the lubricant 44 located radially between the rolling elements 32 and the corresponding raceway 26h of the inner ring is improved when the inner ring 26 rotates. By centrifugal effect, said lubricant initially disposed between the rolling elements 32 and the raceway 26h is moved both radially towards the raceway 28f of the outer ring and axially inwards and outwards toward the sealing ring 40. Then, said lubricant flows radially by gravity towards the inner ring 26 and reaches the helicoid grooves 48, 52. The movement of the lubricant into the closed space 42 is shown schematically on Figure 3 by arrows.

Each outer and inner grooves 46, 48 and 50, 52 of the inner ring forms a circulating path for the lubricant 44 which is distinct from the raceways 26g, 26h and enables to obtain, during rotation of the inner ring 26, a flow of lubricant along the axis 18a of the rolling bearing towards the rolling elements 30, 32 and the corresponding raceways 26g, 28e and 26h, 28f. The grooves 46 to 52 of the inner ring make it possible to obtain a recirculation of the lubricant 44 located between the row of rolling elements 30, 32 and the associated raceways provided on the inner and outer rings 26, 28.

In the disclosed embodiment, the one-half inner ring 26 comprises both inner and outer helicoid grooves for each row of rolling elements 30, 32. Hence, there is a dual flow of lubricant oriented towards each row of rolling elements. Alternatively, it may also be possible to foreseen only one of said grooves for each row of rolling elements 30, 32. However, with the outer and inner grooves positioned axially to one another with respect to each row of rolling elements, the recirculation of the lubricant into the closed space 42 of the rolling bearing is increased. In another variant, it could also be possible to foresee on the inner ring two or more grooves on each side of each row of rolling elements.

As shown on Figure 1, the turbocharger 10 is further provided with a sealing ring 54 mounted radially between the shaft 14 and the cap 24 and axially disposed between the compressor wheel 22 and the rolling bearing 18, and with two sealing rings 56, 58 disposed radially between the shoulder of said shaft 14 and the opening 16 of housing and axially mounted between the rolling bearing 18 and the turbine wheel 20. The sealing rings 54 to 58 are fitted into grooves (not referenced) provided on the exterior surface of the shaft 14 and come into sliding contact with the cap 24 or the housing 12. The sealing rings 54 to 58 may be made from metal.

In another variant not shown, the inner ring 26 may be made into one part and provided with two outer helicoid grooves and two inner helicoid grooves formed radially towards the inside from the exterior surface and directed radially outwards. The two outer helicoid grooves are identical to those disclosed in Figures 1 to 3. The two inner helicoid grooves have the same features as those disclosed in the Figures 1 to 3 and are symmetrical with respect to the transverse radial plane passing through the centre of the rolling bearing. The inner ends of the two inner helicoid grooves may be linked together at the transverse radial plane passing through the centre of the rolling bearing.

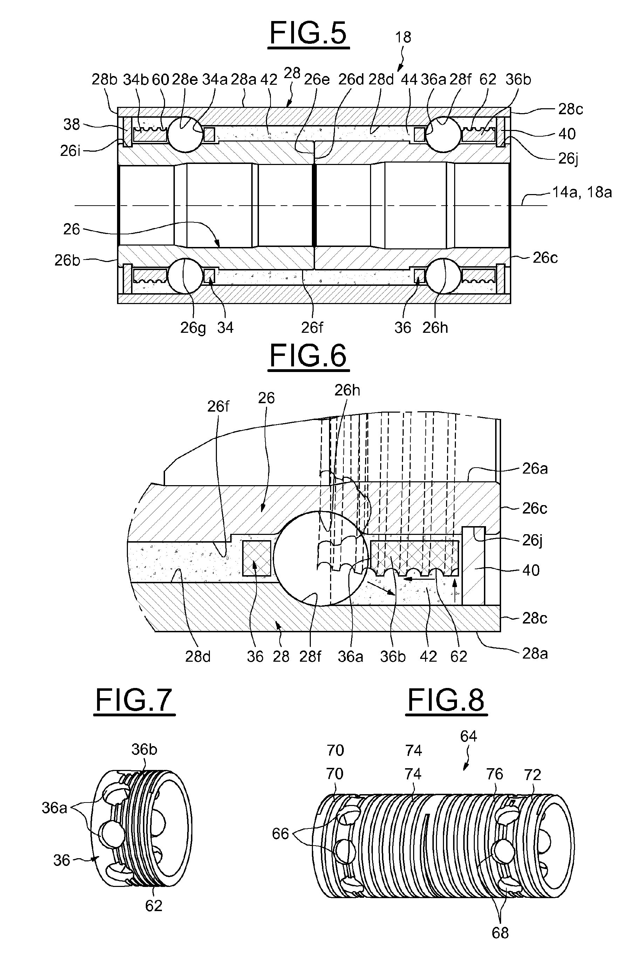

In the embodiment illustrated on Figures 5 to 7, in which identical parts are given identical references, the cages 34, 36 of the rolling bearing each comprise an annular axial extension 34b, 36b extending axially outwards toward the sealing ring 38, 40 while remaining at a small distance from said ring. The axial extension 34b, 36b of each cage also remains at a small distance from the inner and outer rings 26, 28. With regard to previous embodiment, the axial length of each cage 34, 36 is increased. The cages 34, 36 are identical and symmetrical with respect to the transverse radial plane passing through the centre of the rolling bearing.

Each cage 34, 36 comprises an helicoidal groove 60, 62 provided on its exterior surface. Each groove 60, 62 is formed radially towards the inside from the exterior surface of the corresponding cage and is directed radially outwards. In the disclosed embodiment, the grooves 60, 62 have in cross-section a concave internal profile in the shape of a semi-circle. Each groove 60, 62 extends helicoidally on the exterior surface of the cage from the radial surface located axially on the side of the sealing ring 38, 40 to the centre of the cavities 34a, 36a. Each groove 60, 62 opens into said cavities. The helicoidal groove 60, 62 of each cage is oriented such that, with a rotation of said cage, the lubricant 44 located into said grooves flows towards the associated rolling elements 30, 32 and the associated raceways of the inner and outer rings.

In the disclosed embodiment, only one groove is provided on the exterior surface of each cage 34, 36. Alternatively, it could be possible to have, for each cage, two grooves symmetrical with one another relative to a plane passing through the centre of the receiving cavities of said cage. Alternatively or in combination, it may also be possible to provide at least a groove formed radially towards the outside from the bore of the cage and directed radially inwards.

In another embodiment, as shown on Figure 8, a single cage 64 may be used for the two rows of rolling elements of the rolling bearing. The cage 64 comprises first and second rows of cavities 66, 68 so as to receive and hold the two rows of rolling elements. The cage 64 also comprises outer and inner helicoid grooves 70, 72 and 74, 76 which are respectively symmetrical with one another relative to a transverse radial plane passing through the centre of the cage. The grooves 70 to 76 are formed radially towards the inside from the exterior surface of the cage and are directed radially outwards. Each outer groove 70, 72 extends helicoidally on the exterior surface of the cage from an axial end of said cage to the corresponding row of cavities 66, 68. Each inner groove 74, 76 extends helicoidally on the exterior surface of the cage from the centre of the cage to the corresponding row of cavities 66, 68. The outer and inner grooves 70, 74 opens into the cavities 66 and are oriented such that, with a rotation of the cage, the lubricant located into said grooves flows axially towards said cavities. The disposition of the outer and inner grooves 72, 76 with respect to the cavities 68 is the same that the one previously described.

Although the present invention have been illustrated on the basis of a rolling bearing used in a turbocharger with a rotating inner ring, it should be understood that the rolling bearing of the invention may be used in another applications with a rotating inner ring and/or a rotating outer ring. In this case, at least a circulating groove for lubricant may be provided on the bore of the outer ring. The invention applies not only to an angular contact ball rolling bearing with a double rows of balls but also to other types of rolling bearing, for example rolling bearing having four points contact and/or with a single row of balls or with at least three rows of balls.

Furthermore, the invention applies to rolling bearings comprising a plurality of inner rings and/or a plurality of outer rings. Finally, it has to be made clear that by a turbocharger it is also meant a waste heat recovery turbine, a turbocompound or a compressor.

## Claims

1. Rolling bearing comprising an inner ring (26), an outer ring (28), at least one row of rolling elements (32) disposed between raceways provided on the inner and outer rings, and a cage (36) to hold the row of rolling elements, **characterized in that** circulating means (48, 52) for a lubricant are provided on at least one of the rings and/or the cage to obtain a circulation of lubricant towards the row of rolling elements during the rotation of said ring and/or the cage.

2. Rolling bearing according to claim 1, wherein each circulating means provided on at least one of the rings and/or the cage comprises at least a groove.

3. Rolling bearing according to claim 2, wherein the groove is helicoid.

4. Rolling bearing according to claim 2 or 3, wherein each circulating means provided on at least one of the rings and/or the cage comprises first and second grooves axially opposite to one another with respect to the row of rolling elements.

5. Rolling bearing according to any of the preceding claims, wherein the circulating means are formed on an exterior surface (26f) of the inner ring.

6. Rolling bearing according to any of the preceding claims, wherein the circulating means are formed on a bore (28a) of the outer ring.

7. Rolling bearing according to claim 5 or 6, wherein the circulating means open into the raceway (26h, 28f) of the corresponding ring.

8. Rolling bearing according to any of the preceding claims, wherein the circulating means are formed on an exterior surface of the cage.

9. Rolling bearing according to any of the preceding claims, wherein the circulating means are formed on a bore of the cage.

10. Rolling bearing according to claim 8 or 9, wherein the circulating means open into cavities (36a) receiving and holding the rolling elements of said row.

11. Rolling bearing according to any of the preceding claims, comprising two rows of rolling elements (30, 32) disposed between the inner and outer rings.

12. Rolling bearing according to any of the preceding claims, comprising at least two sealing means (38, 40) disposed radially between the inner and outer rings and delimiting together with said rings a closed space (42) inside which the row of rolling elements and the cage are housed, a lubricant (44) being located inside said closed space.

13. Turbocharger comprising a shaft (14), a housing (12), a turbine wheel (20) and a compressor wheel (22) mounted onto the shaft, and at least a rolling bearing (18) according to any of the preceding claims disposed between the shaft and the housing.
